# EUROPEAN PATENT SPECIFICATION

(11) **EP 0 772 187 B1**
(45) Date of publication and mention of the grant of the patent: **02.01.2004**
(21) Application number: 96116502.4
(22) Date of filing: 15.10.1996
(51) Int. Cl.: G11B 5/596

(54) **Use of a PLL in an embedded servo demodulator**
Gebrauch eines Phasenregelkreises in einem eingebetteten Servodemodulator
Utilisation d'un PLL (bruche à verrouillage de phase) dans un démodulateur d'asservissement sous-jacent

(30) Priority: 31.10.1995 US 551097
(43) Date of publication of application: 07.05.1997
(73) Proprietor: Hewlett-Packard Company, A Delaware Corporation, Palo Alto, CA 94304 (US)
(72) Inventor: Kopplin, John, Boise, Idaho 83703 (US)
(74) Representative: Schoppe, Fritz, Dipl.-Ing.

(56) References cited:
- EP-A- 0 166 461
- EP-A- 0 472 397
- US-A- 5 089 757
- US-A- 5 146 183

## Description

### FIELD OF THE INVENTION

This invention relates generally to embedded servo disk drives and, more particularly, to a disk drive in which a phase locked loop is phased locked to and maintained in synchronism with embedded servo fields in any given track in a disk.

### BACKGROUND OF THE INVENTION

A disk drive is an appliance which can store data in concentric tracks on a rotating medium. In a Winchester disk the data is stored as magnetic patterns. In an optical disk the data is stored as reflectivity patterns. The invention disclosed in this patent is not specific to any one type of disk drive, but rather has application to any device where a portion of the patterns on the rotating medium is used to construct a position reference which is used to judge the alignment of the transducing device (herein called "head") to the information-bearing tracks. Therefore, although this disclosure employs the terminology of Winchester disks in describing this invention, this invention is also applicable to floppy disks, Bernoulli disks, optical disks, etc.

The data capacity of a disk drive can be increased if the concentric tracks can be moved closer together. This in turn requires very precise positioning of the transducing head. All high performance disks drives employ a closed loop position feedback system to control the location of the heads. The feedback signal that is needed for this servo function is the position of the active transducer with respect to the center of the servo code track. Such a signal can be demodulated (extracted) from the head's playback signal as it encounters the servo code areas of the disk. Obviously these servo code areas have to coexist with other areas which hold the user's data. The two most widespread techniques which allow the servo areas to coexist with the data areas are the "embedded" servo code (also called "sector servo" or "sampled servo") and the "dedicated" servo code format.

A dedicated servo implementation has often been selected for a product which includes multiple disks in a disk stack, the stack being rotated on a common spindle. One entire surface of a disk in this disk stack is then completely given over to, i.e., dedicated to, servo code recording. With this arrangement a continuous position signal is developed. The sensed position is the location of the servo head with respect to its tracks on the dedicated disk and not the location of the currently active data head with respect to its tracks on some other disk. Usually there is a mechanical error. This mechanical error becomes more significant in each new generation of disk drives as the track density (tracks per radial unit of displacement) increases.

This invention is not relevant to dedicated servo architectures. However, it should be noted that most dedicated servo demodulators do employ a phase locked loop. Since the servo head is always receiving a servo-specific signal from the dedicated servo surface, this dedicated servo phase locked loop continually receives its servo signal and, hence, never needs to "coast". This distinguishes the dedicated servo system from the embedded servo phase locked implementation disclosed herein.

There are prior art uses of PLLs in embedded servo demodulators. However, these PLLs do not maintain synchronization with the playback signal from one servo field to the next. Instead each servo field starts with a constant frequency lock-up area which allows the PLL to synchronize itself to the playback signal before proceeding with the demodulation of the remainder of the servo field. This type of prior art use of a PLL with an embedded servo format is described in U.S. Patent No. 5,136,439 assigned to Seagate and in U.S. Patent No. 4,669,004 assigned to Quantum.

An embedded servo uses time division multiplexing to accommodate both the servo and the data functions on the same surface. Each track is divided into alternating areas reserved for servo or data. Writing of information into the data areas is permitted, whereas the servo areas are never re-recorded. They are preformatted at the time of manufacture with recorded servo code patterns which provide for the recovery of a position signal. The motion of the actuator or carriage which supports the heads can now be based upon the position error of the currently active head. One drawback to this approach is the fact that this position information is not continuously available, but rather can only be sampled as the head intersects each servo field. However, most contemporary disk drive implementations employ digital signal processing chips which can, at best, perform only discrete time operations anyway. Therefore, as long as the sample rate is sufficient for the application the system may be acceptably functional.

The servo fields are a type of overhead which reduces the amount of disk space available for storing the user's data. Hence, efficiency is a fundamental figure of merit of any embedded servo system.

Almost all of the embedded servo schemes (and dedicated servo schemes for that matter) in use today demodulate a position signal from the amplitude of the playback signal produced by the head as it encounters the preformatted servo fields. The magnetization patterns in these servo fields are specially designed to facilitate this mapping between signal amplitude and off-track (radial) position. For example, one approach employs a "two phase" (A phase, B phase) servo code where a constant frequency pattern of "A" transitions (or flux reversals) is permanently recorded just to the left of a data track center. Immediately following the A burst along the track is a second burst, the B burst, of transitions. This B burst is identical to the A burst except that it is recorded just to the right of track center. Therefore, when the playback head flies thru this servo field it will first pick up the A burst pattern and then the B burst pattern. If the head was exactly located on-track, then the 2 burst will have identical amplitude because the head will intersect (overlay) an equal portion of both patterns. More generally, the difference between the amplitudes of the 2 bursts is an analog representation of the radial position of the head with respect to track center, at least over a radial span of around + /one-half of a track.

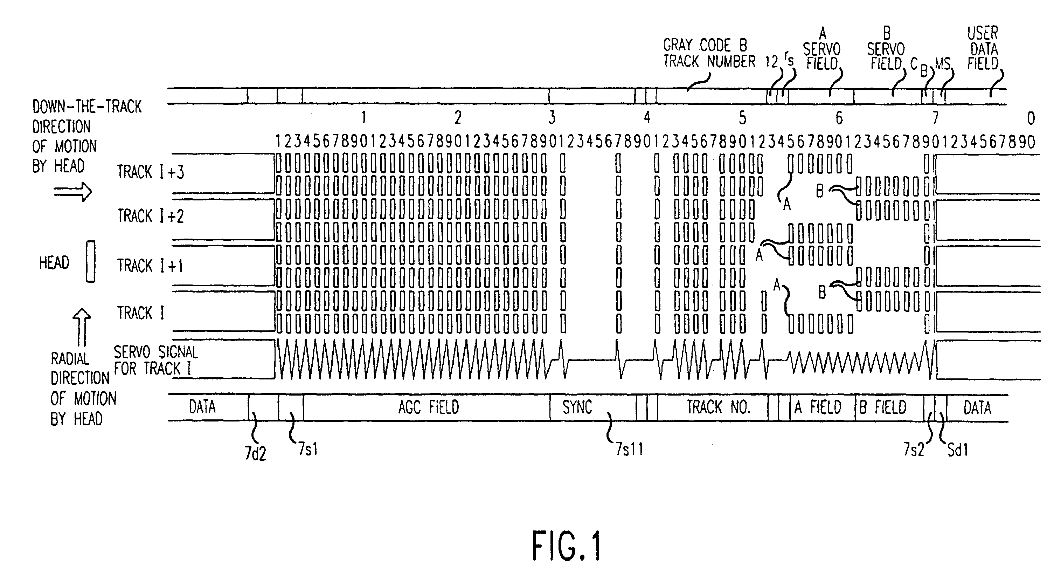

Fig. 1 shows a typical prior art embedded servo format which employs this type of "two phase" servo format. This servo format is the subject of U.S. Patent No. 4,823,212 to Knowles et al. In this particular implementation of a prior art 2 phase, amplitude encoded, embedded servo format, each repetition of the servo field contains an AGC field, a sync mark, a Gray encoded absolute track number, and then the "A" and "B" servo fields (the other fields shown in Fig. 1 are not of interest here). The purpose of the A and B servo fields is to facilitate the construction of a fine position error signal which indicates the displacement of the head from the nearest track center in fractions of a track. The purpose of the Gray encoded track number field is the construction of a coarse PES signal which indicates absolute displacement across the entire disk surface in integer tracks. The coarse and fine PES signals can be combined to produce an absolute position signal having fractional track resolution with a dynamic range encompassing the entire stroke of the carriage.

The purpose of the sync mark is to allow the demodulation circuitry to distinguish the servo areas from the data areas. The detection of this sync mark causes the servo demodulation circuitry to turn on briefly and capture the following track number and A and B fields in order to produce the current integer and fractional PES signals representing the location of the head. Reliable detection of this sync mark is therefore very important.

Ideally the sync mark would be unlike any pattern which could exist elsewhere on the disk. This generally implies that the sync mark should contain a wide gap since the data areas employ a run-length-limited code which limits the maximum gap length that can exist there (note that a "gap" is defined as any area with constant magnetization which therefore does not produce a readback pulse in an inductive head). Unfortunately the periphery of each track contains unpredictable magnetization patterns due to incomplete erasure of old data and due to the fact that adjacent tracks are not written coherently (at least not in the data areas). This means that there really isn't any pattern which can be selected for the servo sync mark that precludes this pattern from being accidentally detected in a data area. This complicates the job of being able to reliably detect the sync mark with the head at any radial location.

Therefore it is standard practice in prior art embedded servo demodulators to limit the search for the sync mark to the general vicinity where it should be found. This is generally implemented by initializing a counter following the successful detection of each sync mark. A predetermined count of this counter then flags the imminent arrival of the next sync mark. This counter is clocked from a source such as a crystal based frequency reference which is not synchronous with the disk. Note that the disk speed, although typically regulated to within +/- .5%, does display some wander. Because the asynchronously clocked counter circuit is unaware of this wander, it can only provide a "general vicinity" type of indication for the arrival of the next sync mark. When this general vicinity signal fires, other logic begins analyzing the readback signal, looking for the specific feature which functions as the sync mark. If this sync mark is detected within the count window then various gating signals are generated next in order to demodulate the Gray encoded track number field and the A and B-type servo fields.

Note that this architecture restricts the accuracy of all windows (gating signals) to 1 count of the asynchronous reference frequency. That is, even after the sync mark has been detected, its true location is only known to within 1 count of the crystal clock counter. Consequently the windows for the track number decoder and the fine PES demodulator cannot be aligned to the readback signal to better than 1 count of the crystal clock. This means that the magnetization density (flux reversals per inch) chosen for these fields is often constrained by this asynchronous clock counter. These areas could be shrunk simply by writing them at a higher density if a synchronous (and phase aligned) clock were available to demodulate them.

In order to properly demodulate the Gray encoded track number and the A and B fine servo fields, it is usually required that the playback signal amplitude be within certain limits. This is accomplished by a conventional automatic gain control (AGC) circuit which is activated in an AGC field. This AGC field typically holds a constant frequency pattern. Note from Fig. 1 that the AGC field is as long as the sum of the coarse PES field (the Gray encoded track number) and the fine PES field (the A and B-type fields). This size is often not mandated by the dynamics of the AGC circuit itself (i.e., by the time required for the AGC circuit to slew to and settle at a new operating point) but rather by the need to keep the sync mark a sufficient distance away from the user's data areas. This is necessary to guarantee that the sync mark is never accidentally detected within the data area. By the time the asynchronous counter indicates the "general vicinity" of the next sync mark, the head will be safely within this large AGC field which cannot be misinterpreted as the sync mark. This is because, unlike the data areas, the AGC field is written coherently across all the tracks; that is, neighboring transitions from adjacent tracks were kept lined up with each other as a deliberate result of the servowrite process employed in manufacture. The neighboring transitions in data areas cannot be trusted to maintain any type of coherent pattern since the relative timing between adjacent tracks will be random.

Summarizing the conventional embedded servo prior art: the use of an asynchronous clock source for flagging the imminent arrival of the next sync mark and for generating the various windows which separate the components of the servo field, has resulted in an unnecessarily large servo field. The density of recording per inch of track is lower than necessary for the head to support and the AGC field is longer than required by the AGC circuit. A more desirable architecture would manage to recover the fine and coarse PES signals from a smaller amount of disk real estate. Furthermore, in prior art embedded servo implementations the cross-talk signal from an adjacent track can display any relative phase with respect to the on-track signal in the data areas.

US-A-5,146,183 describes a phase locked loop for a sector servo system. A servo phase locked loop oscillator provides the control timing function of the servo. Initially, the phase locked loop oscillator is locked in frequency to a frequency reference obtained from a counter/timer in a digital signal processor used to control the servo system. Subsequent to acquisition of the nominal operation frequency, the phase locked loop oscillator is caused to lock in turn to gap and frame character markers derived from the digital information encoded into the servo burst.

It is the object of the present invention to provide an improved disc drive having a new embedded servo system minimizing the overhead associated with the servo function.

This object is achieved by a disk drive according to claim 1.

This invention discloses a new embedded servo system which embodies a technique which minimizes the overhead associated with the servo function. By minimizing overhead, the useful capacity of the storage device is maximized. This is accomplished by a new servo demodulation architecture and implementation employing a novel sampled PLL which permits a reduction in the size of the servo areas and, hence, increases the size of the data areas.

It is an object of the present invention to reduce the overhead of an embedded servo format; i.e., to reduce the area of the fields from which the servo signal is derived. It is evident that a phase locked loop which coasts through all data areas and yet retains correct synchronization with the servo areas will allow for a reduction in the size, i.e., the length, of these servo areas.

It is a further object of the present invention to provide the ability to sense rotational disturbances which disrupt the apparent spindle speed and which may cause the head to move radially off track. This sensing ability is facilitated by the presence of a servo phase locked loop which spends most of the time coasting yet which remains synchronous with the sectors of the rotating disk.

The playback signal from the head in the read channel of a disk drive has an important distinction from other types of communication channels: the received signal is actually periodic with a period of one disk revolution (assuming no intervening writes or radial motion by the head). This follows from the fact that the magnetic flux patterns are written onto (locked into) the rotating media. Consider now the various mechanisms which can interfere with the perfect periodicity of this playback signal.

The first such mechanism is a perturbation in the spindle speed. As long as the drive housing is held stationary, the spindle speed will be well regulated since it is constrained by both an electronic spindle speed controller and by the physics of a rotating inertia, i.e., the inertia of a rotating mass (the disk stack). When the housing experiences shock or vibration that results in housing rotation, then the timing of the playback signal from the head will be perturbed with dynamics similar to those in the applied shock or vibration. Fortunately these disturbances occur at low frequencies, generally in the vicinity of the spindle once-around frequency.

A second mechanism which can disturb the playback signal's timing is circumferential (down-the-track) motion by the head relative to the drive housing. The servo system holds the actuator arm stationary in a radial (across-the-track) sense. The primary source of circumferential motion is mechanical flutter in the head suspension. This flutter will be at the resonant frequency of the suspension (typically in the kHz range) but fortunately will be of low amplitude. This is especially true when the head incorporates the industry standard "in-line" suspension which puts the "strong" axis of the head suspension in the down-the-track direction. The playback signal is periodic, although possibly with low frequency perturbations. Unlike prior art servo implementations in which the digital counter is asynchronously clocked and must be initialized in each detected embedded servo field a phase locked loop provides a continuously variable frequency, which exactly matches the time between servo fields. Hence, as long as this PLL follows the timing jitter and wander of the playback signal, it predicts the arrival of the next servo field to within a small fraction of a cycle of its voltage controlled oscillator (VCO). A PLL which maintains synchronicity with the rotating disk precisely predicts the boundary between the data area and the servo field. Besides predicting the arrival of the next servo field, this PLL also provides a clock which is synchronous with the playback signal during the servo field. This synchronous clock feature facilitates a reduction in the size of many of the components of the embedded servo field.

In this invention, the servo PLL coasts through data fields between servo fields and is already correctly synchronized at the start of each embedded servo field. Hence, each servo field need not include a PLL lock-up field as in the prior art. A lock-up field is undesirable because it represents yet more overhead. This new type of coasting PLL is initially synchronized in a lock-up field which exists only once per revolution per track in each track. its synchronization is maintained during the remainder of the disk revolution by a feedback loop which is only active during the embedded servo fields. As will be seen, the necessary timing correction is derived from the pre-existing components of the servo field and, thus, a new "timing reference" component need not be added. Each individual servo field has enough timing reference "material" to maintain the PLL's synchronization in its once around initialisation, but not enough to initialize the PLL's synchronization.

Other objects, features, and advantages of the present invention will become apparent from the following detailed description when read in conjunction with the drawings and appended claims.

### BRIEF DESCRIPTION OF THE DRAWINGS

Fig. 1 illustrates a two phase, amplitude encoded, embedded servo format of U.S. Patent No. 4,823,212 to Knowles et al.
Fig. 2 shows a disk drive having a disk format embodying the once-around phase lock loop lock-up field according to this invention.

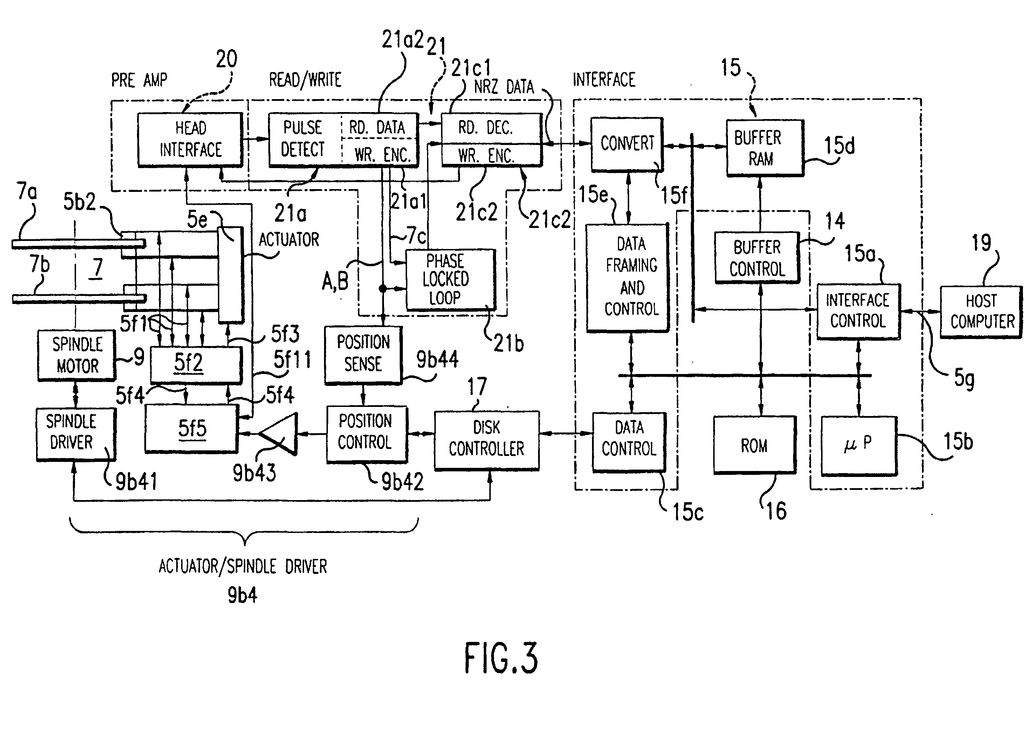

Fig. 3 diagrammatically depicts a disk drive system embodying servo and data processing functions according to this invention.
Fig. 4 details a phase-locked loop of the types employed in Fig. 3.
Fig. 5a depicts the relationship of the disk 7 to the counter C1.
Fig. 5b shows the relationship of the coast signal to the counter C1.
Fig. 6 shows the "phase encoded" chevron types of format disclosed in U.S. Patent No. 4,549,232.
Fig. 7 shows how a fine PES signal can be demodulated from a PLL's SpeedUp and SlowDown signals generated in response to a phase encoded, chevron type embedded servo field.
Fig. 8 shows the same demodulation process as in Fig. 7 only now the PLL is assumed to have had a slight synchronization error during the particular servo field illustrated.
Fig. 9 shows an alternate implementation of a phase encoded chevron format which is applicable herein.

### DETAILED DESCRIPTION OF THE INVENTION

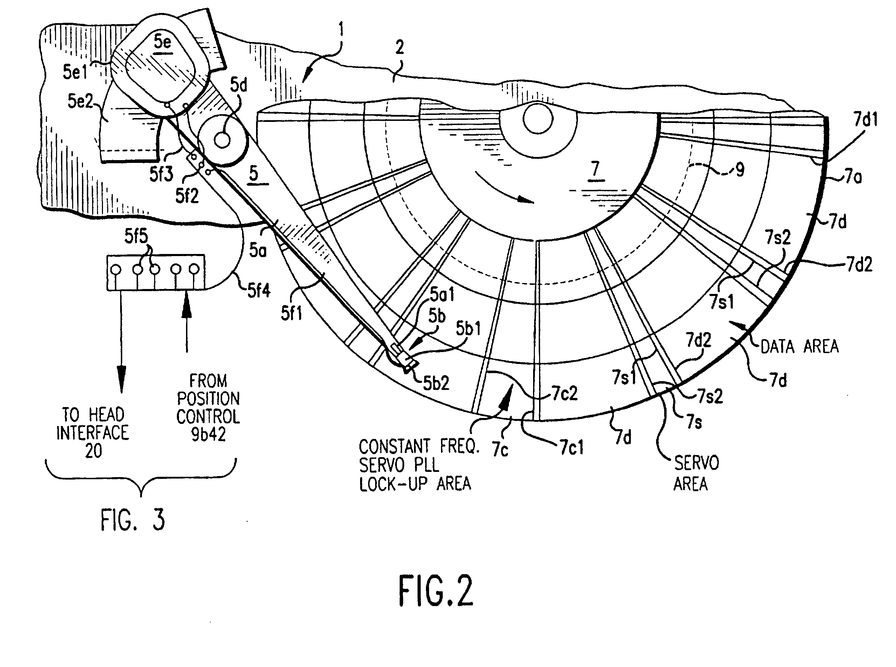

While this invention may be practiced with a two phase embedded servo of the type of Fig. 1, one preferred implementation of the new embedded servo pre-format is shown in Fig. 2. Note the presence of a special initializing constant frequency field 7c located a single time on each data track. In contrast, the servo field 7s is replicated numerous times on each data track. The "once-around" constant frequency field 7c is employed to lock the servo PLL to the correct frequency. By the time the magnetic head 5b2 leaves this field 7c the PLL is running at some exact multiple of the disk once-around frequency. Between the other servo fields 7s are the data areas 7d. The playback signal from the head which is scanning a data area could conceivably be employed to help keep the servo PLL in lock with the disk. But during a write operation the servo PLL must be able to maintain lock without any such aid from the data areas 7d. Therefore, in this implementation of the invention, the playback signal in all data areas is ignored. Instead, the servo PLL simply coasts through all data areas. This means that the servo PLL is a discrete time feedback loop with a sampling rate equal to the arrival rate of the servo fields 7s. This servo PLL gets a single quick frequency update as it passes through each servo field 7s. This update (or sample) must be sufficient to keep the PLL correctly locked to the actual disk speed (more properly, to the playback signal produced by the active head 5b2 in the servo fields).

Following each commanded switch to a new head 5b2 on a new disk surface, it is necessary to wait for the once-around PLL lock-up field to be sensed by the head 5b2 before the servo PLL can be properly synchronized to facilitate demodulation. However, this time penalty can be minimized by arranging the track format such that these once-around lock-up fields 7c are located at the most likely point for such a head switch; i.e., at the point where the data of head (n) is exhausted and the switch to head (n + 1) would normally occur.

In order to minimize the overhead represented by the embedded servo format, it is necessary to keep the number of servo fields to whatever minimum is just sufficient to capture the actual dynamics of the relative mechanical motion between the head 5b2 and its track. This means that the servo PLL must survive (maintain lock) with the minimum number of samples per revolution. Below some minimum number of samples per revolution the servo PLL will lose lock with the disk. This requisite number will depend upon the quality of the spindle speed regulator, the presence of external disturbances such as shock and vibration, the VCO frequency, the timing jitter arising from the head suspension, the quality of the servowrite process, and the jitter and drift inherent in the PLL itself.

Another novel aspect of this invention is the concept to use individual fields within the complete servo mark for multiple purposes. By "doubling up" duties, it is possible to further shrink the size of the servo field and thus reduce the overhead it represents. A first example of how the presence of a PLL in the servo demodulator facilitates this type of space saving will be illustrated with reference to a two phase amplitude encoded format, as seen in Fig. 1. The prior art implementation required a distinct sync mark to flag the start of the servo field and to initiate timing to predict the arrival of the next servo field. By adding a PLL to the servo demodulator this sync mark can be eliminated. A unique timing mark is no longer needed since the start of the next servo field can now be identified simply by counting integer cycles of the VCO clock produced by the servo PLL. Verification that the PLL is still correctly locked (and thus is correctly aligned with the servo field) is accomplished by checking for some code or format constraint within either the Gray encoded track number field or the fine PES fields.

For example, one prior art implementation of the Gray encoded hard track number field comes from the IBM Technical Disclosure Bulletin by Pennington entitled "Dicell Gray Coding of Disk File Track Addresses" (Vol. 25, No. 2, 7/82, p. 776-7). In this implementation, each bit of the track number is represented in a cell containing three parts. The first third of each cell holds a readback pulse for timing purposes (this is called the "clock" pulse). If the corresponding track number bit is a 1 then the next readback pulse occurs in the center third of the same cell. If the track number bit is a 0 then the next readback pulse occurs in the final third of the cell. To employ the new servo PLL concept with this prior art Gray coding scheme, the servo PLL's VCO is locked "always there" clock pulses were occurring with the expected alignment to the VCO . If so, then the PLL had remained locked since the previous servo field and hence, has properly demarcated the new servo field. Note that in this implementation a loss of lock is not detectable where the VCO slipped by 3, 6, 9 etc., cycles in either direction. Fortunately it would take a very energetic disturbance to produce a timing shift of this magnitude during the time span between two consecutive servo fields. If this type of disturbance was possible then further code constraints may be placed on the Gray coded track number field (or fine PES fields) in order to detect even larger cycle slips. This illustrates how the servo PLL can reliably demarcate the servo field even without the presence of a distinct sync mark.

Another example of the "dual use" concept is the fact that the servo PLL will not need a new feature (or zone) to be added to the embedded servo fields for the purpose of providing its time reference. The timing update for the servo PLL (that is, the "speed up" or "slow down" correction) can be derived from the components that already exist in the servo field. For example, with the Pennington Gray coded track number scheme, reliance can be placed on the fact that the pulse detector (which detects the peaks of the analog readback waveform) will always detect 2 pulses per bit of the track number. Hence, this track number field can provide a sufficient reference signal useful to generate the PLL's speed up or slow down timing correction. With this implementation the servo PLL could be commanded to coast (i.e., ignore the readback signal) everywhere except during the Gray coded track number field.

Another alternative is to use the A and B fine PES fields to update the servo PLL's synchronization. Note that when the head is at track center both the A and the B fields will be detected and the PLL can correct its frequency based upon a comparison with both fields. For any radial displacement by the head at least 1 of these 2 fields will be detected and can still function as the PLL's reference. This approach works even better with the prior art "four phase" amplitude encoded formats having A, B, C, and D fields. With a four phase format at least 2 and typically 3 of the 4 fields will be detected by the head at any radial offset. When the number of readback pulses which the PLL is allowed to observe varies, the PLL's loop gain varies; but within limits this does not perturb the PLL's synchronization. A PLL has a nice free-wheeling or "inertial" property which allows it to maintain the proper frequency regardless of exactly when it receives a burst of the reference signal or how many pulses are in this burst.

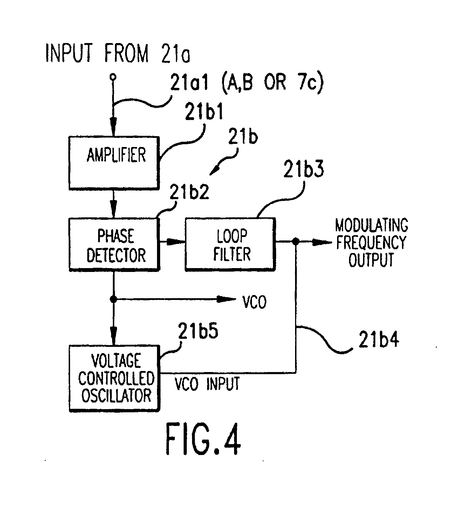

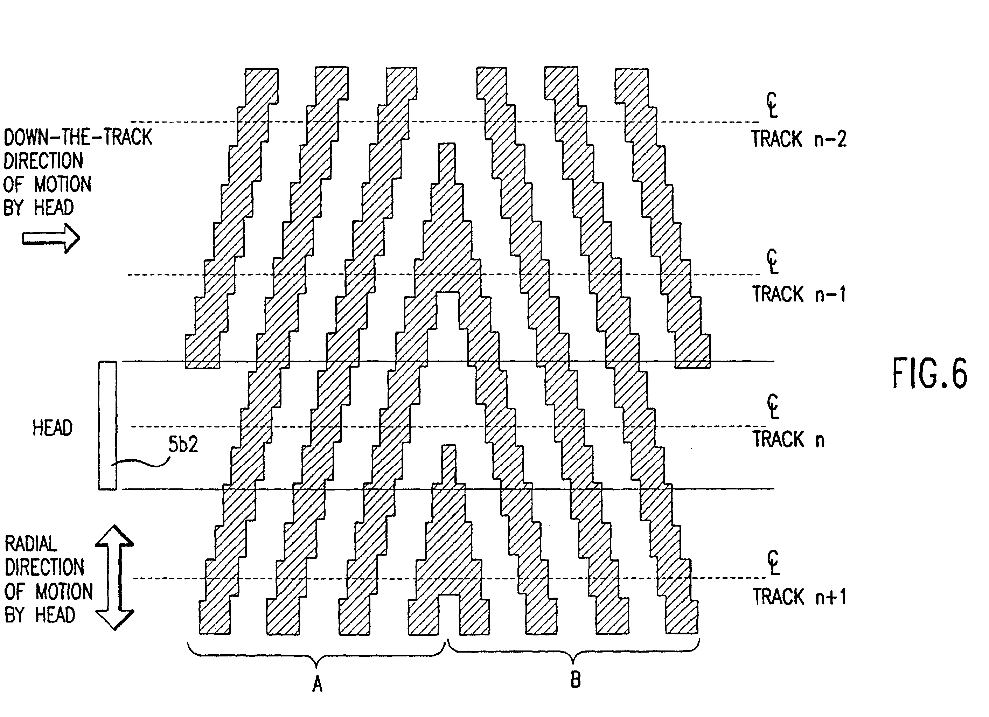

Thus, it has been demonstrated that the presence of a PLL in the servo demodulator allows for a reduction in the size of many of the components of the embedded servo field and yet requires no new components of its own. This provides the efficiency of the new technique. In particular, there is a nice symbiotic relationship between the requirements for the coarse and fine PES signals and the requirements for the sampled PLL: the same magnetized patterns can fulfill both functions. This "dual use" technique works even better with a phase encoded servo format. Thus far, only amplitude encoded formats have been considered, where the fine PES signal is derived from the amplitude of the playback signal in the A and B fields (assuming a two phase format). However, IBM has pioneered an interesting phase encoded approach in U.S. Patent No. 4,549,232 granted to Axmear & Collins, Axmear et al hereinafter, and assigned to IBM. Axmear et al disclose a technique which demodulates a position signal from the phase of the playback signal rather than from its amplitude. The key to this technique is to use chevron shaped magnetization patterns as the pre-recorded servo format. This is illustrated in Fig. 6 herein, which is adapted from Fig. 4 of Axmear et al. In this illustration one polarity of magnetization is represented by the shading and the other polarity of magnetization by the lack of shading. Note that regardless of the radial displacement of the head, it always encounters a consistent width of each magnetized domain. Thus, the playback signal amplitude is not a function of the head's radial position. However, the timing of the readback pulses will depend upon the head's radial position. Hence, any demodulation technique which can sense this type of time relation (or "phase") can then infer the head's position

Since the signal amplitude in these chevron fields is independent of the head's radial displacement, these fields can also provide the reference for the AGC function. This is another example of the "dual use" principal.

Axmear et al disclose that the slanted transitions necessary for this scheme can be formatted by using a "step and delay" technique. Consider the process of writing a single slanted transition. A single flux reversal is first written at some arbitrary time with the head at some radial position. Then the head is stepped radially by a fraction of a track and this same transition is then rewritten during a subsequent disk revolution but with a very slight time delay. The second write step erases a portion of the magnetization pattern which was formed in the previous step. As this process is continued, a stair-step type of magnetization pattern is generated. The physical dimensions of the head prevent it from distinguishing the fine grain nature of the stair step. Instead, the head integrates together a few of the steps and thus produces a single pulse which moves in time (or phase) based on the radial position of the head. These stair-steps are illustrated in Fig. 6 but are omitted (smoothed out) in the remaining figures.

Axmear et al stress that their demodulation process does not employ a synchronous clock. That is, the position signal is recovered from the readback signal produced by the slanted transitions without the use of a clock which is synchronous with these slanted transitions. The demodulation technique which Axmear et al disclose employs an asynchronous clock signal, a "reference clock signal", generated by a crystal oscillator. By having the frequency of this "reference clock" equal to the nominal frequency of the readback waveform, certain demodulation errors can be minimized. But this reference clock does not posses any particular phase relationship to the readback waveform. The arbitrary phase of this reference clock cancels out of the measurement because the position signal is demodulated from the following difference computation:
(position error) = (some constant) *
[(phase of A field relative to the reference clock)
- (phase of B field relative to the reference clock) ]
where "A field" refers to the left half of a chevron pattern and "B field" refers to the corresponding right half.

Whereas Axmear et al specifically reject the use of a PLL in the demodulator, it is taught herein that the presence of a PLL provides numerous advantages over the technique of Axmear et al and other prior art techniques. Primarily, the presence of the synchronous clock from the servo PLL will allow the servo fields to be shrunk, which then allows additional data capacity. For example, the presence of a PLL in the servo demodulator allows this type of chevron magnetization pattern to serve two very different purposes: as a timing reference for the PLL and as a position reference for the head. The overhead of the embedded servo format can be minimized by using the same magnetized area for both functions. This dual application of the slanted transition is not taught by Axmear et al. Indeed the drawings for each of the preferred embodiments of Axmear et al, show a "clock" field which is used to provide a timing reference, stating, "A useful system for sector (embedded) servo would also include a clock field for recognizing the start of the servo fields..." The novel application herein of a PLL for the job of demodulating slanted transitions eliminates this unnecessary clock field and the overhead that it represents.

This invention concerning the use of a servo PLL with a phase encoded embedded servo format is described with respect to Fig. 6 which shows a simple chevron pattern. Shown in this diagram are the magnetization regions and the corresponding signals used in the demodulator. The diagram illustrates three cases of off-track conditions by the head:
Case 1: the head is to the left of track center
Case 2: the head is exactly at track center
Case 3: the head is to the right of track center
where, in all three cases, the servo PLL was assumed to be in perfect synchronization with the playback signal that would result if the head intersects the chevron pattern exactly on track.

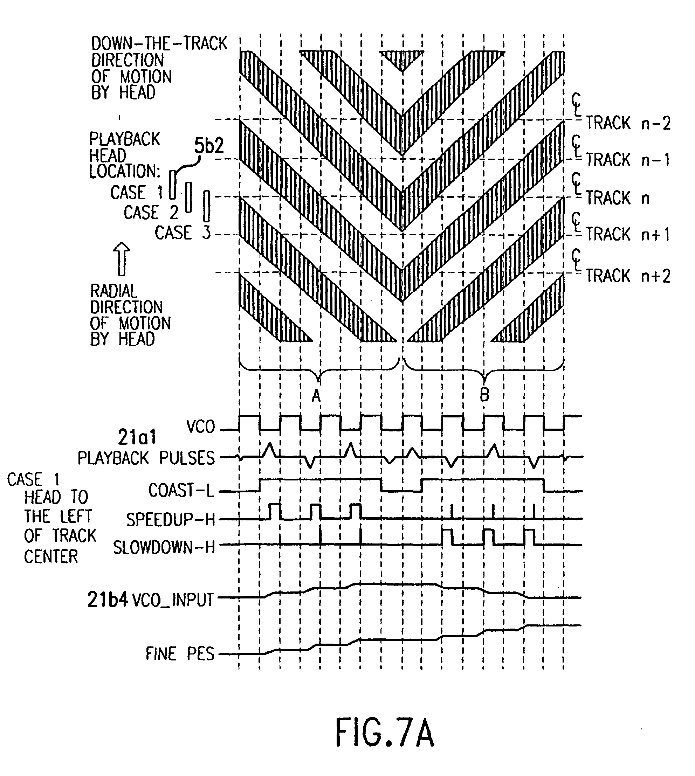

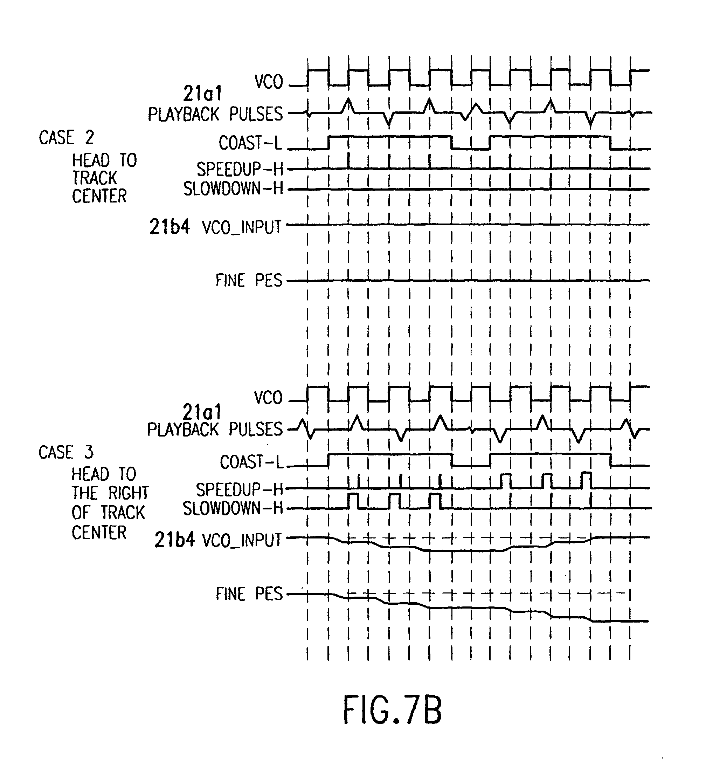

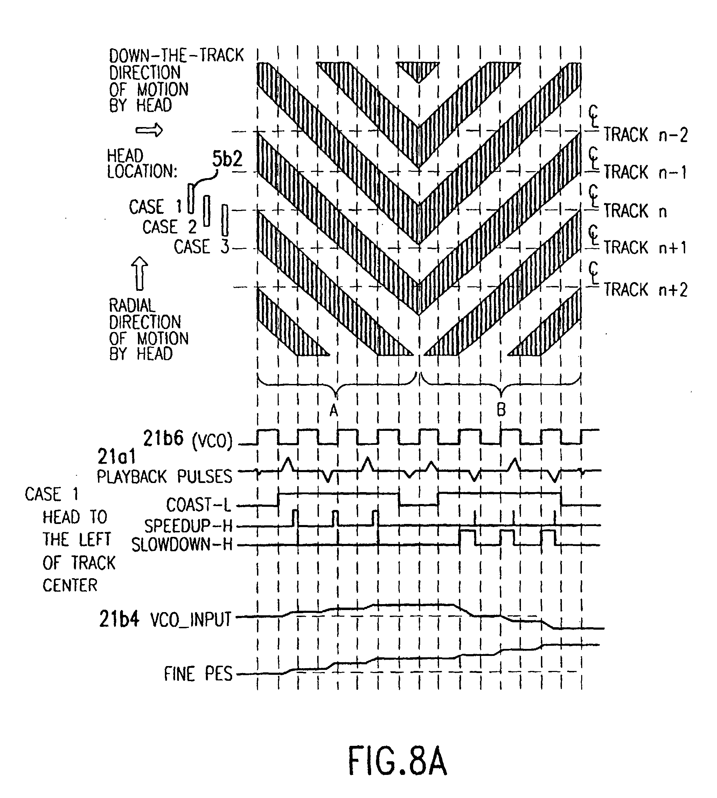

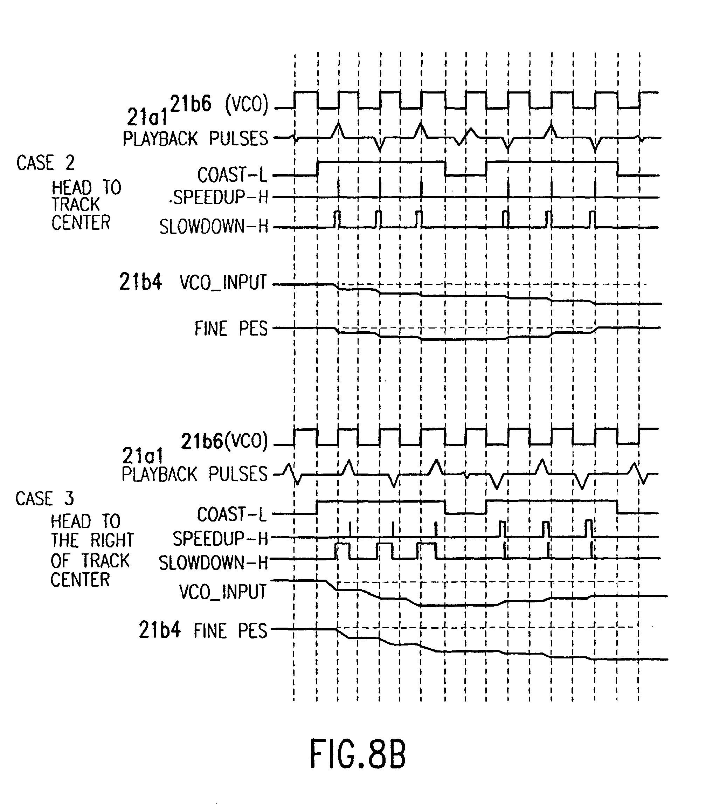

Fig. 8 is similar to Fig. 7 except that here the PLL was assumed to be slightly leading the on-track (that is, Case 2) playback signal at the time of the head's arrival at the illustrated embedded servo field. The following preferred implementation allows the same circuitry to demodulate from a single chevron both a timing update for the PLL and a position update for the actuator. The timing update is used to correct the PLL frequency so that it will still be correctly synchronized with the next servo field. The position update is used to correct the radial alignment of the head so that it remains on track until the next servo field.

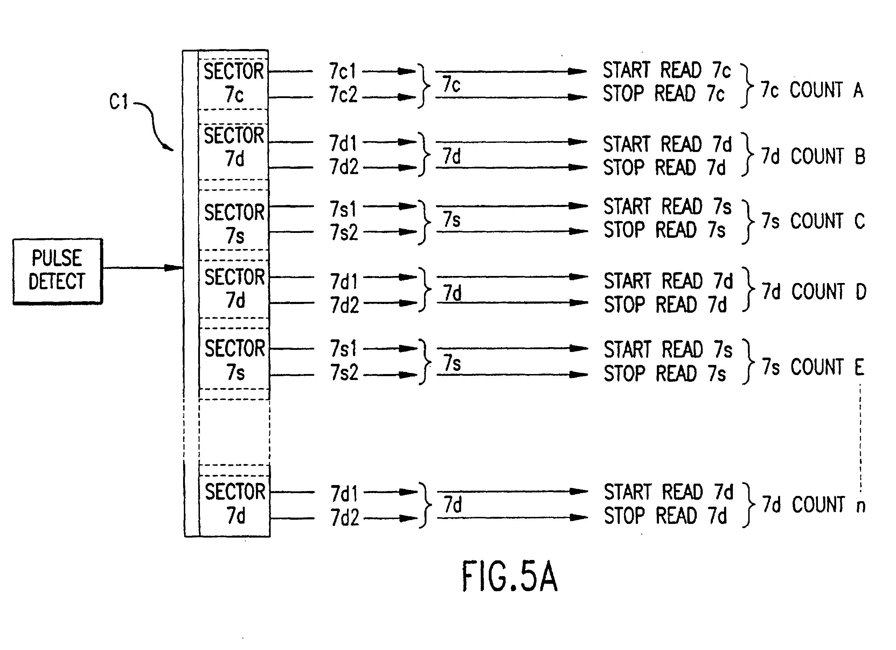

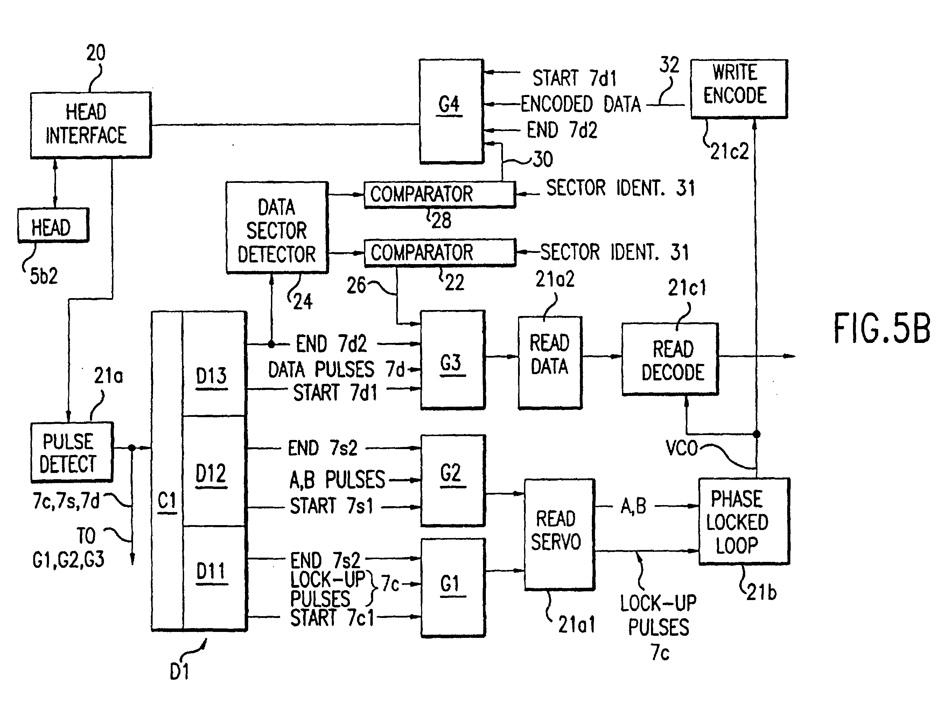

In Fig. 7 and 8, the signal labeled "VCO" is the output of the servo PLL. The feedback loop 21b4 of the servo PLL forces the rising edges of the VCO signal to align with the peaks of the pulses in the analog playback signal produced by the head. Note that the peaks of both polarities are embedded as is standard in the prior art. The signal labeled "Coast-L" is the signal which commands the servo PLL to ignore the data areas and any undesired regions in the servo areas. The assertion of this signal causes the VCO to free-run at its current frequency. Conventional timing correction signals "SpeedUP" and "SlowDown" are created by a phase detector in the PLL. These two digital signals then control the charge pump, which drives an integrator whose output is the analog control voltage to the VCO (labeled "VCO input" in Figs. 4 and 5b. The coast function can be easily implemented by having the Coast-L signal tristate the charge pump. With no current flowing into the integrator the VCO control voltage and frequency remain constant.

A key aspect of the present invention is the realization that when a head encounters a chevron format, both the fine PES signal and the timing correction signal for the PLL can be derived from the pulse width of the SpeedUp-H and SlowDown-H signals. Although these 2 signals are digital, their pulse width is a continuously variable quantity which can easily be converted to an analog voltage by a pulse width-to-voltage circuit. This is exactly what happens in standard implementations of charge pump PLL's: the width of each of the SpeedUp-H and SlowDown-H signals is integrated to produce the control voltage to the VCO. This invention simply integrates a different ordering of the same 2 signals in order to produce a fine PES signal. This is shown in Figs. 7 and 8. Note that SpeedUp-H always acts to increase the VCO control voltage. However, SpeedUp-H active in the first half of the chevron acts to increase the fine PES signal, while SpeedUp-H active in the second half of the chevron acts to decrease the fine PES signal. Note that by the conclusion of the chevron, VCO control voltage and the fine PES signal have both achieved the desired levels regardless of the quality (within limits) of the VCO's synchronization with the playback signal.

In one sense, the chevron format provides a timing correction in the "common mode" response of a PLL and a position correction in the "difference mode" response of the same PLL. These responses are essentially orthogonal, which is what allows a single magnetization pattern to encode two different signals. Said another way, a chevron format allows a d.c. (or baseband) fine PES signal to be recovered from an a.c. disturbance to a PLL's timing correction. The PLL's bandwidth does not allow it to respond to a speed-up command generated by the first half of the chevron before the second half of the chevron cancels this command. The net PLL speed correction can be zero even while a non-zero fine PES signal is detected. More generally, two independent signals can be demodulated from a PLL which tracks the playback signal produced by the head's interaction with the chevron shaped magnetization pattern.

Note that the synchronization error in the PLL assumed in Fig. 8 does not hinder (within limits) the detection of the position signal. All that is required is that the servo PLL not walk away from the playback signal in a cumulative sense. Perfect synchronization is not required.

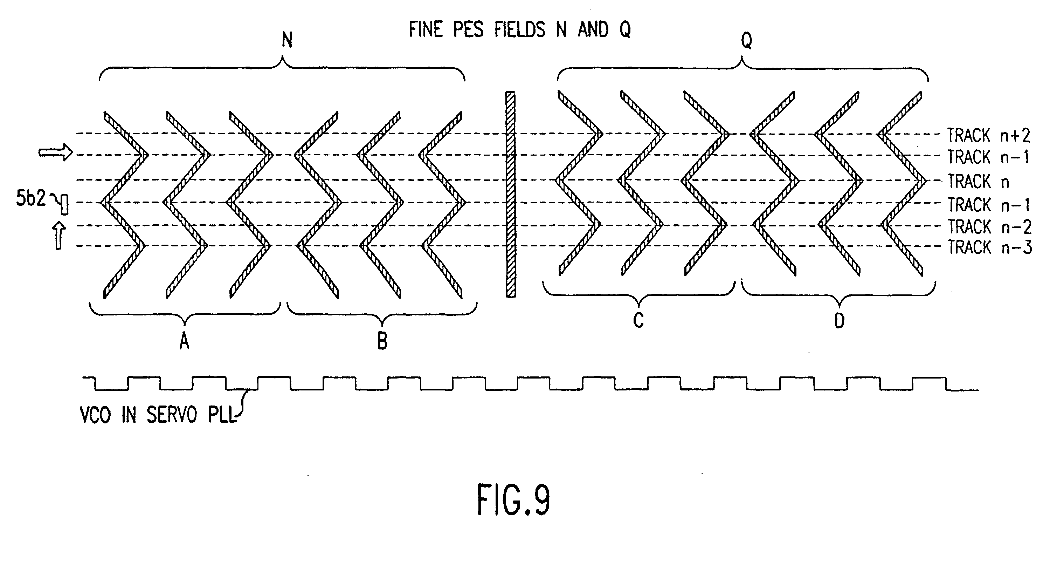

Other types of phase encoded magnetization formats also support the simultaneous creation of a timing correction and a position correction. For example, Fig. 9 shows another type of chevron magnetization format which was not illustrated by Axmear et al but which works fine with a servo PLL demodulator. One new aspect illustrated in Fig. 9 is the addition of a quadrature field. Many of the prior art amplitude encoded servo formats support the creation of both a normal and quadrature fine PES signal. These two signals are in quadrature such that when one is displaying its maximum possible nonlinearity (or other nonideal behavior) the other signal is best behaved. The position correction to the actuator is then based upon whichever signal is closer to its optimum operating point. Axmear et al do not describe the creation of a quadrature signal from a phase encoded format. However, Fig. 9 shows that the normal fine PES field would be employed when the head was near the tracks labeled n-2, n, n + 2, etc., while the quadrature fine PES field would be employed near the tracks labeled n-1, n +1, n + 3, etc. The quadrature magnetization pattern is the same as the normal magnetization pattern except that it has been shifted in the radial direction.

Thus far, there has only been described how the presence of a PLL in the servo demodulator can help shrink the servo fields of an embedded servo approach. However, this same device also permits shrinking of the data areas. In prior art embedded servo disk drives, the write clock which was used for timing the writing of the user's data was derived from an asynchronous frequency reference, such as a crystal. Therefore, the writing frequency is not linked to the instantaneous spindle speed. Consequently a variable amount of disk rotation ends up being consumed by the writing of a fixed amount of data. In order that this variation not result in the overwriting of the next embedded servo field, the disk format has to be designed with gaps separating the data areas from the embedded servo areas. These gaps provide a cushion for spindle speed variations.

But a servo PLL which is always locked to the embedded servo fields provides a synchronous clock. Therefore, if the write clock is based upon the servo PLL frequency (say, phase locked to it) then each write will consume a very repeatable amount of disk rotation. Consequently, the spindle speed tolerance gaps can be eliminated from the disk format, thus increasing the product's data capacity.

Besides the elimination of the spindle speed tolerance gaps, this approach also allows for an increase in the track density (tracks per radial inch) beyond what could be achieved with the prior art. This is because the data transitions can now be written coherently on adjacent tracks. Phase delaying recording of the transitions on all odd numbered tracks by 180' with respect to the transitions on all even numbered tracks keeps the peak in the cross-talk signal away from the peak in the on-track signal and, hence, improves the error rate of the data decoder. An improved error rate allows for an increase in the track density and consequently in the drive's capacity.

A final advantage provided by a sampled PLL is that it can function as a rotation sensor. It is becoming standard practice in very small disk drives to include accelerometers to sense the external forces acting upon the product. Whereas a perfectly balanced rotary actuator is not perturbed by translational acceleration, it is perturbed by rotational acceleration. If this rotational disturbance can be sensed then it can be compensated by any number of existing strategies. Minor disturbances can be bucked by the creation of a counter-balancing signal. When the disturbance is excessive the product may choose to write inhibit until the disturbance has ended. All of these strategies depend upon being able to sense rotational disturbances. The sampled PLL concept provides this type of sensor. The VCO frequency in the coasting PLL displays an inertial behavior which allows it to track constant spindle speed. External rotation on the disk drive frame results in spindle speed variation which results in synchronization error between the servo PLL and the playback signal from the embedded servo fields. This synchronization error can be very precisely detected and, hence, is a sensitive indicator of spindle speed disturbance. Thus, the presence of a sampled PLL may ameliorate or obviate the requirement for a rotational accelerometer.

## Claims

1. A disk drive comprising:
at least one rotatable disk (7) having servo sectors (7s) between data sectors (7d);
a movable actuator (5) having a head (5b) positioned over said disk for scanning said sectors as said disk rotates and producing servo signals and data signals; and
a servo demodulator circuit comprising a phase locked loop (21b), said phase locked loop (21b) maintaining synchronicity with said servo signals during rotation of the disk to provide a clock signal that is synchronous with the servo signal, said clock signal being provided by the phase locked loop (21b) on the basis of scanning a constant frequency field (7c) once per rotation of the disk (7), the constant frequency field (7c) comprising a frequency signal.

2. The disk drive of claim 1, wherein
said head (5b) produces playback signals from said embedded servo sectors; and
said phase locked loop (21b) is responsive to said playback signals for predicting boundaries between the servo sectors and the data sectors.

3. The disk drive of claim 1 or 2, wherein
said at least one disk (7) has at least one track (1); and
said sampled servo sectors (7s) are of lesser length than said constant frequency field (7c).

## Patentansprüche

1. Ein Plattenlaufwerk mit folgenden Merkmalen:
zumindest einer drehbaren Platte (7), die Servosektoren (7s) zwischen Datensektoren (7d) aufweist;
einem bewegbaren Betätigungsglied (5), das einen Kopf (5b) aufweist, der über der Platte positioniert ist, zum Abtasten der Sektoren, wenn sich die Platte dreht, und zum Erzeugen von Servosignalen und Datensignalen; und
einer Servodemodulatorschaltung, die eine Phasenverriegelungsschleife (21b) aufweist, wobei die Phasenverriegelungsschleife (21b) eine Synchronität mit den Servosignalen während einer Drehung der Platte beibehält, um ein Taktsignal zu liefern, das synchron zu dem Servosignal ist, wobei das Taktsignal durch die Phasenverriegelungsschleife (21b) auf der Basis eines einmaligen Abtastens eines Konstantfrequenzfeldes (7c) pro Drehung der Platte (7) bereitgestellt wird, wobei das Konstantfrequenzfeld (7c) ein Frequenzsignal aufweist.

2. Das Plattenlaufwerk gemäß Anspruch 1, bei dem:
der Kopf (5b) Wiedergabesignale aus den eingebetteten Servosektoren erzeugt; und
die Phasenverriegelungsschleife (21b) auf die Wiedergabesignale ansprechend ist, zum Vorhersagen von Grenzen zwischen den Servosektoren und den Datensektoren ist.

3. Das Plattenlaufwerk gemäß Anspruch 1 oder 2, bei dem:
die zumindest eine Platte (7) zumindest eine Spur (1) aufweist; und
die abgetasteten Servosektoren (7s) eine geringere Länge als das Konstantfrequenzfeld (7c) aufweisen.

## Revendications

1. Lecteur de disques comprenant :
au moins un disque pouvant être mis en rotation (7) ayant des secteurs pour asservir (7s) entre des secteurs pour les données (7d) ;
un actionneur mobile (5) ayant une tête (5b) positionnée au-dessus dudit disque pour balayer lesdits secteurs lorsque ledit disque tourne et produire des signaux pour asservir et des signaux pour les données ; et
un circuit démodulateur d'asservissement comprenant une boucle à verrouillage de phase (21b), ladite boucle à verrouillage de phase (21b) conservant un synchronisme avec lesdits signaux pour asservir pendant une rotation du disque pour fournir un signal d'horloge qui est synchrone avec le signal pour asservir, ledit signal d'horloge étant fourni par la boucle à verrouillage de phase (21b) sur la base d'un balayage d'un champ à fréquence constante (7c) une fois par rotation du disque (7), le champ à fréquence constante (7c) comprenant un signal de fréquence.

2. Lecteur de disques de la revendication 1, dans lequel
ladite tête (5b) produit des signaux de reproduction à partir desdits secteurs pour asservir imbriqués et
ladite boucle à verrouillage de phase (21b) est sensible aux dits signaux de reproduction pour prédire des frontières entre les secteurs pour asservir et les secteurs pour les données.

3. Lecteur de disques de la revendication 1 ou 2, dans lequel
ledit au moins un disque (7) possède au moins une piste (1) ;
et
lesdits secteurs pour asservir échantillonnés sont d'une longueur moindre que ledit champ à fréquence constante.
